Europäisches Patentamt

European Patent Office

Office européen des brevets

(19)

(11) Publication number: **0 071 690**
**A1**

# EUROPEAN PATENT APPLICATION

(21) Application number: **81830144.2**

(22) Date of filing: **10.08.81**

(51) Int. Cl.³: **A 63 F 9/22**

(43) Date of publication of application: **16.02.83** Bulletin **83/7**

(84) Designated Contracting States: **AT BE CH DE FR GB IT LI LU NL SE**

(71) Applicant: **Firm MODEL RACING S.P.A., Via Brecciate, 27, I-60018 Montemarciano (Ancona) (IT)**

(72) Inventor: **Chinea, Lanfranco, Via Salvi, 2, I-60020 Ancona (IT)**

(74) Representative: **Sassatelli, Franco, c/o INIP Ufficio Internazionale Brevetti per Deposito di Brevetti e Marchi via Mazzini, 170, I-40139 Bologna (IT)**

(54) Videoelectronic game between two players simulating a football match between two teams.

(57) A video-electronic game for two players simulating a football match between two teams. The movement of each team is controlled by two handles (1, 2, 3, 4) each of which acts on an arrangement of four microswitches corresponding to the longitudinal and transverse directions on the screen (7). Diagonal movement of a team is achieved by the simultaneous activation of two adjacent microswitches.

- 1;-

"Videoelectronic game between two players simulating a football match between two teams"

The invention employs a videoelectronic game which can be carried out by two players and simulating a football match between two teams.

A particularity of the invention consists in the employ of mechanical controls operating on an electronic device enabling a manual manoeuvrability at competitive level and the apparition on the cinescope of images concerning the match phases determined only by the skill of the players. These ones contend the ball by means of reflex promptness and by differently using the game combinations allowed by the electronic means, with a view to marking a goal which can be noticed as soon as the relevant image is perceived on the screen.

At present, games with mechanical control and impulse are used, and others with electronic control and impulse: only the ones of mechanical type allow the reference to the football game in as much they permit phases of game resulting from players' competitivity. A play ground is employed contained in a box assembly holding two parallel sets of cylindrical rods in circular eyelets on the sides, with alternate disposition, each bringing integral one part of the ball movement bodies.

0071690

Since each set holds the movement bodies of one team and can be controlled by means of knobs integral with the said rods projecting from the sides, the gamers contend the ball standing at the two sides of the device and gives different impulses by the knobs to the motion bodies. A competitivity is resulting which satifies the players' agonism, but the game causes several inconvenience.

In particular: the considerable noise caused by the mechanical assembly, the frequent rebounding of the small ball out from the box and the necessity of being obliged to put another ball after a goal marking, since the previous one has fallen into the loader. The invented device allows to carry out games with perception of ball matches between two teams in which the high stimulus generated by the agonistic factor and permitted by the mechanical control, is integrated by the silent features, automatism and visibility offered by the videoelectronic device. Its activation, if required with a jetton contrivance, determines the apparition on the cinescope of the image concerning the game panel and in succession the ones of the dynamic components entering the playground and reaching the starting points.

In a version, an image concerning the referee with the ball could be seen and successively the ones of the two team components. The game phases are composed by the two gamers with mechanical control who have the sensation of personally contending the ball. In a preferred version, the team can be controlled by means of a knob pair fitted on one side. The knob moves, in a coaxial seat, a small cylinder which orthogonally bears an integral pin passing into the opening of the said seat and acting as a movement limiting eyelet. The impulse transmission of the control to the electri cal installation is allowed by an inserted part integral with the pin, which alternatively operates on a system of four microswitches, fitted around the upper edge of the opening and connected to the installation. The mechanical control permits to this inserted part eight direction variables, four of which for either longitudinal or transversal displacements activate only one microswitch and preset the image concerning the ball to move according one of the directions orthogonale to the game plane, and other four for turning displacements bring to activate two adjoining micros and preset the image to move according directions and angles intermediates to the previous ones. The motion control is by pushbutton fitted on the knob for the phase syincronism. By acting on the pushbutton, its underlying reversed truncated-cone shaped part is lowered and by slanting walls in adherence lets the small cylinder to advance on a microswitch in axial position which closes the relevant circuit and, by retention, brings again the small cylinder in position.

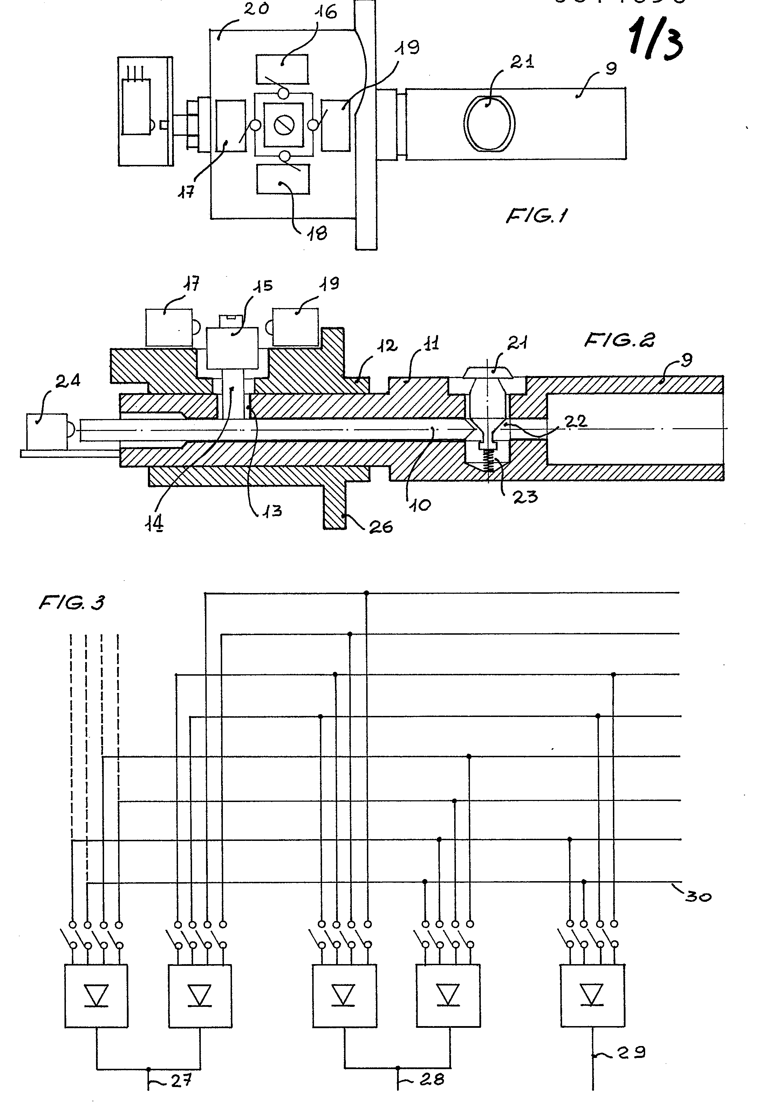

A not limiting version is illustrated by the drawings of Tables 1,2 and 3. Fig.1 is the view from above of the control device showing the five micros and the drawing pushbutton. Fig.2 is the longitudinal section of the same pushbutton and the drawing device with the one for throwing presetting both employing the small cylinder with axial elongation. Fig.3 is the wiring diagram of the electrical equipment connecting the microswitches of the 4 presetting controls for drawing. Fig. 4 is the prospectic view showing one pair of rod for player placing employing a pair of columns for supporting the device in overhanging position. Fig.5 and Fig.6 illustrate the said device in respectively front views supported on the above columns according to two different heights by means of different bores in correspondence to fixing pins.

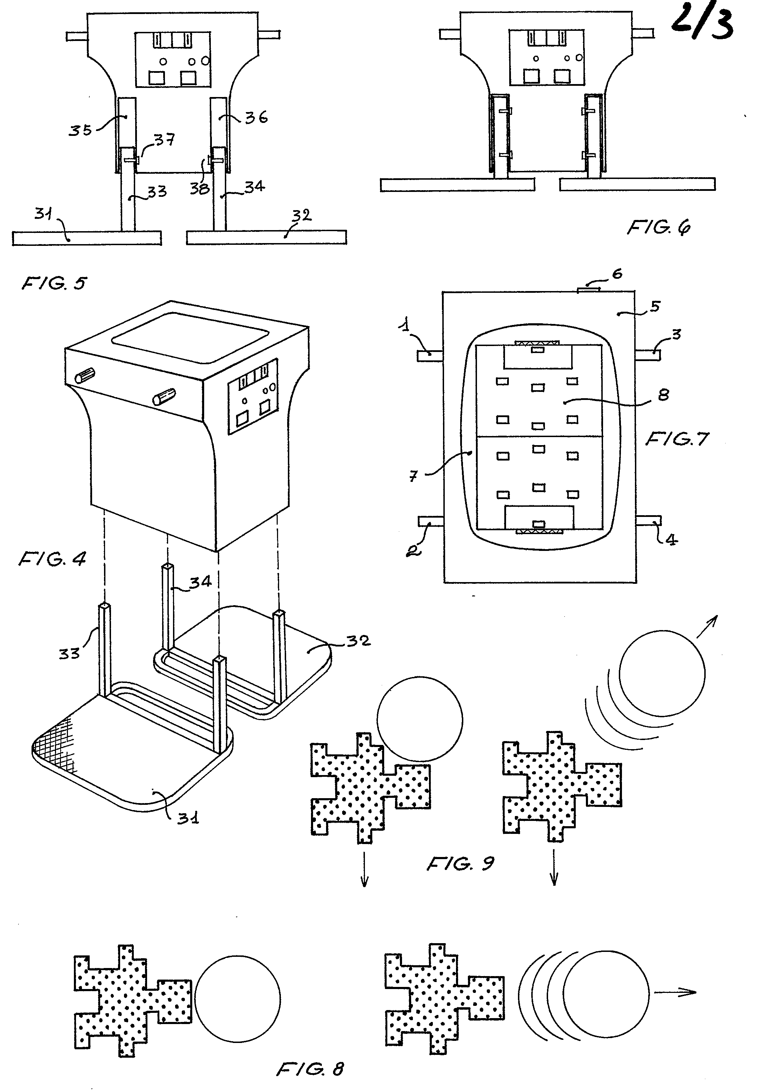

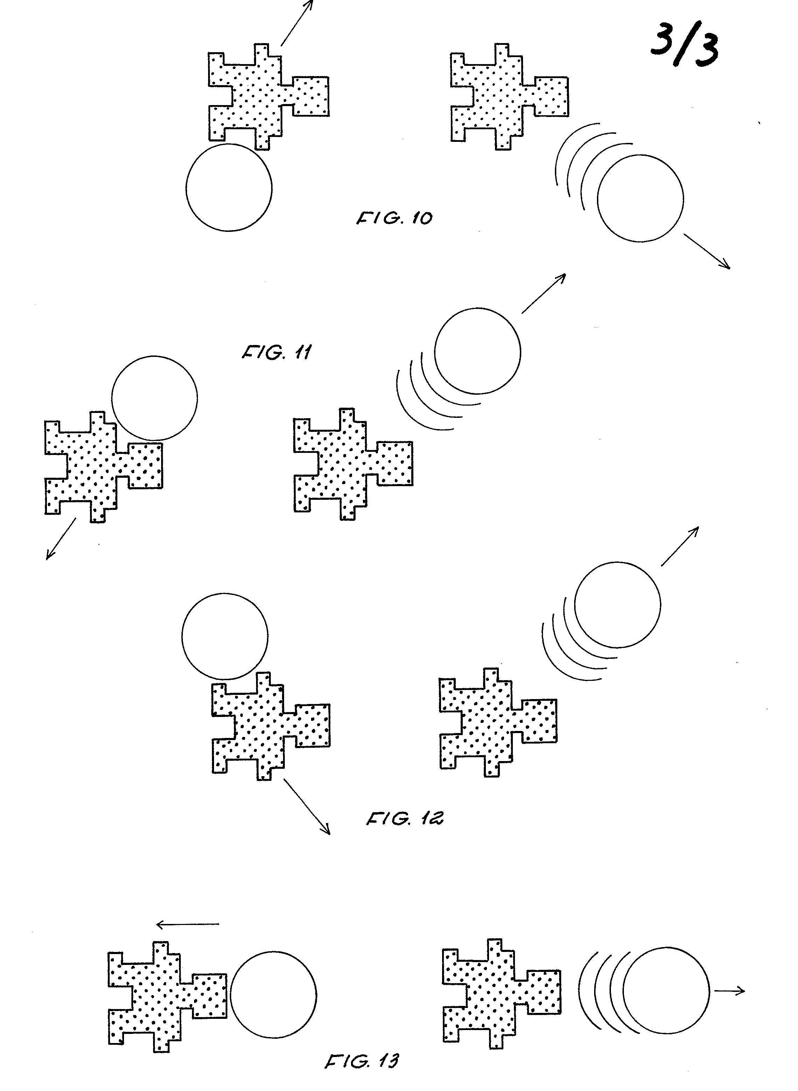

Fig. 7 is view of the device plane to show the video panel and the relevant image of the playground for a football match. In particular, Fig. 8 is initially the view of a team component standing still with stopped ball and then in the goal direction after the ball kicking. Fig. 8 is initially the view of a team component in possession of the ball moving to the right and then of the ball direction after it has been thrown. Fig. 10 is beginning the view of a team component possessing the ball moving slanting forward, and then the direction of the ball after throwing it.

Fig. 11 is at first the view of a component with the ball moving slanting backwards and then the ball direction after the kick. Fig. 12 is the starting view of the component with the ball moving slanting forward and afterwards the ball direction after kicking it. Fig. 13 is firstly the view of a component with the ball with horizontal backward motion and then the ball direction after throwing. The version foresees the pair of knobs 1,2 and 3, 4, with table 5 and jetton contrivance 6 with video panel 7, on which at first image 8 is formed by the insertion of the image on the cinescope. The player grips the knob 9 of the control device and moves cylinder 10 in coaxial 11 integral with the play device by means of a piece 12. This movement is limited by opening 13 through pin 14 integral with 10 and fitted in it. The said pin bears insertion 15 operating on the system of the four micros 16,17, 18 and 19 fitted on base 20 of the support. For controlling the throw, pushbutton 21 has to pressed in its seat 21; after having overcome the spring 23 resistance, rod 10 advances pressing micro 24 supported by bracket. 25. In particular, part 12 is supported by base 26 integral with the playing device. With reference to the wiring diagram 27 is control signal common to both right knob 2 and

0071690

left one 1; 28 is the control signal common for knobs 3 and 4 right and left; ,29 is the control signal common to the four microswitches of the throwing pushbutton 21 for all the four knobs. The seven ducts 30 are the control signals of all possible combinations for the ovement of the team component on the playground. According to a version, the game device employs a couple of bases 31 and 32 with a pair of columns 33 and 34. These columns penetrate inot the coaxial cavities 35 and 36 and foresee bores at different heights in order to permit, by means of their different positioning on the bores of the coaxial parts, to fit the device at different heights from the pavement. The integral condition can be obtained by means of pins 37 and 38.

In particular,by acting on one microswitch, the movement of the set of three components is obtained in a rectilinear way in trajectory direction,i.e. according to one of the four orthogonal directions or parallel to the sides of the playground. By pressing two adjoining micros, a trajectory with intermediate angle in respect to the orthogonal axles is achieved, of the previous system of movement. If both movements are carried out in quick succession, a perception of the team component movement is obtained in a pivoting way respect to the motion of the component of the opposite team.

In practice the particulars of the execution, the type of the refernce play, the form and typology of the mechanical controls,of the wiring diagram of the fixed component images as well of those of the moving ones on the video panel may vary in relation.

CLAIMS:

1) Videoelectronic game between two players simulating a foot= ball match between two teams, characterized by the fact that the device allows to carry out games with perception of ball matches between two teams in which the high stimulus generated by the agonistic factor and permitted by the mechanical control. is integrated by the silent features, automatism a nd visibility offered by the videoelectronic device.

2) Videoelectronic game between two players simulating a foot= ball match between two teams, as per previous claim, charact erized by the fact that its activation, if required with a jetton contrivance, determines the apparition on the cinesco pe of the image concerning the game panel and in succession the ones of the dynamic components entering the playground and reaching the starting points.

3) Videoelectronic game between two players simulating a foot ball match between two teams, as per previous claims, charac terized by the fact that the game phases are composed by the two gamers with mechanical control who have the sensation of personally contending the ball. In a preferred version, the team can be controlled by means of a knob pair fitted on one side.

4) Videoelectronic game between two players simulating a foot ball match between two teams, as per previous claims, charac terized by the fact that the knob moves, in a coaxial seat, a small cylinder which orthogonally bears an integral pin passing into the opening of the said seat and acting as a movement limiting eyelet. The impulse transmission of the control to the electrical installation is allowed by an in serted part integral with the pin, which alternatively operates on a system of four microswitches fitted around the upper edge of the opening and connected to the installation. The mechanical control permits to this inserted part eight direction variables, four of which for either longitudinal or transversal displacements activate only one microswitch and preset the image concerning the ball to move according one of the directions orthogonale to the game plane, and other four for turning displacements bring to activate two adjoining micros and preset the image to move according directions and angles intermediates to the previous ones.

5) Videoelectronic game between two players simulating a football match between two teams, as per previous claims, characterized by the fact that the motion control is by pushbutton fitted on the knob for the phase syncronism. By acting on the pushbutton, its underlying reversed truncated -cone shaped part is lowered and by slanting walls in adherence lets the small cylinder to advance on a microswitch in axial position which closes the relevant circuit and, by retention, brings again the small cylinder in position.

6) Videoelectronic game between two players simulating a football match between two teams, as per previous claims, characterized by the fact that the version foresees the pair of knobs 1,2 and 3,4, with table 5 and jetton contrivance 6 with video panel 7, on which at first image 8 is formed by the insertion of the image on the cinescope. The player grips the knob 9 of the control device and moves cylinder 10 in coaxial 11 integral with the play device by means of piece 12. This movement is limited by opening 13 through pin 14 integral with 10 and fitted in it. The said pin bears insertion 15 operating on the system of the four micros 16;17,18 and 19 fitted on base 20 of the support. For controlling the throw, push

c button 21 has to pressed in its seat 21; after having overco me the spring 23 resistance, rod 10 advances pressing micro 24 supported by bracket 25. In particular, part 12 is suppor ted by base 26 integral with the playing device.

7) Videoelectronic game  between two players simulating a foot ball match between two teams, as per previous claims, charac terized by the fact that with reference to the wiring diagram: 27 is control signal common to both right knob 2 and left o ne 1; 28 is the control signal common for knobs 3 and 4 right and left; 29 is the control signal common to the four micro switches of the throwing pushbutton 21 for all the four knobs. The seven duct 30 are the control signals of all possible co mbinations for the movement of the team components on the pl ayground.

8) Videoelectronic game between two players simulating a foot ball match between two teams, as per previous claims, charac terized by the fact that acconrding to a version, the game device employs a couple of bases 31 and 32 with a pair of co lumns 33 and 34. These columns penetrate into the coaxial cavities 35 and 36 and foresee bores at different heights in order to permit, by means of their different positioning on the bores of the coaxial parts, to fit the device at differ ent heights from the pavement. The integral condition can be obtained by means of pins 37 and 38.

FIG.1

FIG.2

FIG. 3

0071690

2/3

35 36 37 33 38 34 31 32

FIG. 5

FIG. 6

FIG. 4

33 34 32 31

FIG. 7

1 5 6 3 8 7 2 4

FIG. 9

FIG. 8

FIG. 10

FIG. 11

FIG. 12

FIG. 13

European Patent
Office

EUROPEAN SEARCH REPORT

0071690
Application number

EP 81 83 0144

| Category | Citation of document with indication, where appropriate, of relevant passages | Relevant to claim |
|---|---|---|
| | **DOCUMENTS CONSIDERED TO BE RELEVANT** | |
| X | BE - A - 810 733 (VAN MELE)<br><br>* page 4, line 3 - page 7, line 2; figures * | 1,2,3 |
| Y | | 4 |
| | --- | |
| X | RADIO FERNSEHEN ELEKTRONIK, vol. 29, no. 8, 1980 BERLIN (DE) R. WIESNER: "Bildschirmspielgerät BSS 01" pages 511-512<br><br>* page 511, left-hand column, line 1 - middle-column, line 24; figures * | 1,2,3 |
| | --- | |
| Y | DE - A - 2 653 859 (FREDERIKSEN)<br><br>* page 22, line 14 - page 23, line 4; page 27, line 23 - page 28, line 15; figures 1,4 * | 4 |
| | --------- | |

**CLASSIFICATION OF THE APPLICATION (Int. Cl. 3)**

A 63 F 9/22

**TECHNICAL FIELDS SEARCHED (Int.Cl. 3)**

A 63 F

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| The Hague | 06-04-1982 | BARTLETT |